(19) **Europäisches Patentamt**

**European Patent Office**

**Office européen des brevets**

(11) Veröffentlichungsnummer: **0 352 366**
**A2**

## (12) EUROPÄISCHE PATENTANMELDUNG

(21) Anmeldenummer: **88119650.5**

(22) Anmeldetag: **25.11.88**

(51) Int. Cl.⁴: **A22C 25/14**

(30) Priorität: **26.07.88 DE 8809525 U**

(43) Veröffentlichungstag der Anmeldung:
**31.01.90 Patentblatt 90/05**

(84) Benannte Vertragsstaaten:
**AT BE DE ES FR GB IT NL**

(71) Anmelder: **Ostfalk, Alfred**
**Odilostrasse 6**
**D-8070 Ingolstadt(DE)**

(72) Erfinder: **Ostfalk, Alfred**
**Odilostrasse 6**
**D-8070 Ingolstadt(DE)**

(74) Vertreter: **Neubauer, Hans-Jürgen, Dipl.-Phys.**
**Fauststrasse 30**
**D-8070 Ingolstadt(DE)**

(54) **Vorrichtung zum Ausnehmen von Aalen.**

㊗ Die Erfindung betrifft eine Vorrichtung zum einfachen, sauberen, schnellen und ungefährlichen sowie fischschonenden Ausnehmen von Aalen. Diese Vorrichtung besteht aus einem Rohr (2) mit einem Innendurchmesser und einer Länge etwa entsprechend der Aalgröße. Das Rohr (2) ist in einem vorderen Bereich (4) wenigstens in der Länge eines Aalkopfs (5) zylindrisch geschlossen. Nach hinten zu ist das Rohr (2) nach oben offen und bildet einen Rinnenbereich (6) zum Einlegen eines Aalkörpers. Am Rohr (2) ist eine zylindrisch geschlossene Schiebehülse (8) verschiebbar angebracht. Im geschlossenen Bereich (4) wird der Kopf des Aals ggf. mit einer Haltevorrichtung (10) fixiert, mit der Schiebehülse (8) kann der Körper des Aals gehalten werden, so daß dieser beim Ausnehmen ruhig im Rinnenbereich (6) liegt. In einer bevorzugten Ausgestaltung sind zwei Schiebehülsen vorgesehen.

FIG. 1

## Vorrichtung zum Ausnehmen von Aalen

Die Erfindung betrifft eine Vorrichtung zum Ausnehmen von Aalen gemäß dem Oberbegriff des Anspruchs 1.

Aale sind bekanntlich Fische mit einem langen, gestreckten Körper, an dem an der Ober- und Unterseite ein durchgehendes Flossenband verläuft. Die Länge des Körpers liegt bei ausgewachsenen Tieren üblicherweise etwa zwischen 50 bis 100 cm. Der Körper läuft vorne in einem schmalen Kopf aus. Die Außenhaut des Aals ist mit einer glitschigen Schleimschicht überzogen. Zur Fortbewegung verwindet der Aal seinen Körper mit kräftigen Bewegungen.

Aale werden von Sportfischern auch nachts mit Ködern und Haken gefangen. Nach dem Fang wird der Aal mit einem Tuch oder Papier gefaßt, damit er wegen seiner Schleimschicht der Hand nicht entgleitet, und waidgerecht durch einen Stich im Bereich hinter dem Kopf getötet. Damit ist der Aal zwar medizinisch tot, jedoch keineswegs bewegungslos. Bekanntlich windet sich ein Aal wegen seiner "Lebensgeister" bis zu mehreren Stunden mit kräftigen Bewegungen.

Dadurch ergeben sich für einen Fischer erhebliche Probleme beim Ausnehmen eines gefangenen Aals. Zum Ausnehmen ist es erforderlich, ein Messer mit der Spitze am Waidloch anzusetzen und den Bauch des Aals bis nach vorne zum Kopfbereich aufzuschlitzen. Dies ist ersichtlich schwierig, da ein Aal einerseits durch seine Schleimschicht ohnehin schwierig zu halten ist und andererseits gerade beim Aufschneiden starke, kräftige Windungen und Bewegungen macht. Das Ausnehmen eines Aales ist daher eine unangenehme und langwierige Tätigkeit. Das Ausnehmen ist aber zudem gefährlich, da durch die heftigen Aalbewegungen die Führung des Messers schwierig ist und nicht nur der Aal unregelmäßig zerschnitten werden kann, sondern auch Handverletzungen von Fischern durch abgeglittene Messer durchaus üblich sind. Solche Verletzungen sind besonders gefährlich, wenn sie mit Aalblut in Verbindung kommen, da dieses ein starkes Nervengift enthält.

Da das Töten und Ausnehmen eines Aales eine so unangenehme Tätigkeit ist, sind insbesondere auch aus anderen Ländern sehr unwaidmännische und rüde Methoden bekannt, z.B. gefangene Aale in Salz oder Sand zu werfen und zu warten, bis sie zugrunde gehen und bewegungslos sind. Solche Methoden sind aufgrund des Tierschutzes nicht akzeptabel.

Aufgabe der Erfindung ist es demgegenüber, eine Vorrichtung zu schaffen, mit der ein frisch getöteter Aal einfach, sauber, schnell, ungefährlich und fischschonend ausgenommen werden kann.

Diese Aufgabe wird mit den Merkmalen des Anspruchs 1 gelöst.

Gemäß Anspruch 1 besteht die Vorrichtung aus einem Rohr, das wenigstens die Länge eines auszunehmenden Aals hat und einen Innendurchmesser aufweist, der ebenfalls etwa dem Durchmesser des Aals entspricht. Es ist somit zweckmäßig, für einen Angler mehrere Vorrichtungen unterschiedlicher Länge und einem der Länge entsprechenden Durchmesser mitzuführen, um je nach gefangenem Aal eine entsprechende, der Aallänge angepaßte Vorrichtung verwenden zu können. Da diese Länge aber keine kritische Größe ist, wird ein Angler üblicherweise mit etwa drei Vorrichtungen in abgestufter Länge auskommen.

Dieses Rohr ist in einem vorderen Bereich wenigstens in der Länge des Kopfbereichs eines Aals geschlossen, wobei dieser geschlossene Bereich zum Einlegen und Halten des Aalkopfs dient.

Das Rohr ist vom geschlossenen, vorderen Bereich ausgehend nach hinten einseitig in Längsrichtung wenigstens in der Länge des Aals offen, so daß ein nach oben offener Rinnenbereich zum Einlegen des Aalkörpers gebildet ist.

Weiter ist eine Schiebehülse vorgesehen, bei einer bevorzugt zylindrischen Ausfürung mit einem Innendurchmesser entsprechend dem Außendurchmesser des Rohrs, so daß die Schiebehülse am Rohr entlang wenigstens im Rinnenbereich verschiebbar ist. Die Hülse kann auch als nicht geschlossene, nach oben gewölbte Rohr-Abdeckung entlang einer Führung am Rohr verschiebbar sein.

Zum Ausnehmen wird der Aal mit seinem Kopf in den geschlossenen Bereich so eingesteckt und in die Rinne eingelegt, in der Weise, daß der Bauch des Aals nach oben liegt. Der Kopf des Aals ist im geschlossenen Rohrbereich gehalten, während der Bereich des Körpers durch Darüberschieben der Schiebehülse fixiert wird. Zum Aufschneiden des Aals kann die Schiebehülse entlang des Körpers bei Bedarf verschoben werden, so daß der Bereich, in dem das Messer gerade geführt wird, in jedem Fall völlig ruhig liegt. Die Schleimschicht des Aales ist hierbei nicht mehr hinderlich, da die Vorrichtung bzw. das Rohr und nicht der Aal direkt in der Hand gehalten wird.

Diese einfache Halte- und Fixiervorrichtung für einen Aal funktioniert erstaunlich gut, denn es hat sich gezeigt, daß ein Aal (im Gegensatz zu einer Schlange) im wesentliche kräf tige Bewegungen nur in seiner Horizontal-, jedoch nicht in seiner Vertikalebene durchführen kann. In der erfindungsgemäßen Vorrichtung ist der Aal jedoch in seiner horizontalen Bewegungsrichtung in der nach oben offenen Rinne gehalten und fixiert. Der rückwärtige

2

Bereich hinter dem Waidloch, der nicht mehr aufgeschnitten werden muß, wird mit der Schiebehülse umgreifend gehalten, so daß der Aal am Herauswinden gehindert ist.

Somit kann der Angler einen frisch gefangenen Aal nach dem Töten und dem Einlegen und Fixieren in der Vorrichtung bequem, einfach und sauber ausnehmen, ohne daß für ihn eine Verletzungsgefahr vorliegt und wobei der Fisch geschont wird.

Nach Anspruch 2 ist es vorteilhaft, die Schiebehülse etwas schwergängig auf dem Rohr verschiebbar zu machen, so daß sie sich an jeder Position selbst hält. Dies kann z.B. auch dadurch erreicht werden, daß die Schiebehülse am Rohr elastisch anliegt.

Eine besonders bevorzugte Ausführung nach Anspruch 3 wird erreicht, wenn die zylindrische Rinne nicht bis zur Hälfte des Kreisbogens aufgeschnitten ist, sondern etwas weniger, so daß die Rinnenlängsränder (im Querschnitt gesehen) nach oben bereits etwas aufeinander zugerichtet stehen. Damit ist eine ausreichend breite Längsöffnung zum Einlegen eines Aals und für die Tätigkeiten beim Ausnehmen geschaffen, der Aal wird aber dadurch sehr gut, präzise und bewegungslos gehalten.

Eine weitere, besonders bevorzugte Ausführung wird erreicht, wenn nach Anspruch 4 zwei Schiebehülsen am Rohr vorgesehen sind. Dies hat den Vorteil, daß mit einer Schiebehülse der hintere Bereich des Aals in jedem Fall gehalten werden kann und die zweite Schiebehülse beim Ausnehmen im Bereich des Messers mitgeführt werden kann, so daß der Aal in jedem Fall am gerade geführten Schnitt völlig ruhig und bewegungslos liegt. Auch die erste Schiebehülse kann beim Verschieben der zweiten Schiebehülse in deren Bereich bei Bedarf nachgescho ben werden.

Eine zweckmäßige Längendimensionierung der Schiebehülse wird mit Anspruch 5 vorgeschlagen, wobei die Länge bei Verwendung nur einer Schiebehülse bzw. die Summe der Längen bei der Verwendung von zwei Schiebehülsen etwa 1/3 der Länge des offenen Rinnenbereichs betragen soll.

Die Einführung des Aalkopfes in den geschlossenen, vorderen Rohrbereich ist zu dessen Fixierung in einer einfachen Ausführungsform ausreichend. Es ist aber vorteilhafter, den Aalkopf in seiner eingeführten Lage mit Hilfe einer Haltevorrichtung nach Anspruch 6 festzulegen, so daß der Aal sicher in der Rohrlängsrichtung fixiert ist und auch in Rohrlängsrichtung nicht aus der Vorrichtung herausrutschen kann.

Mit den Ansprüchen 7, 8 und 9 sind vorteilhafte und zweckmäßige Ausgestaltungen solcher Haltevorrichtungen beansprucht.

Eine einfache und sehr wirksame Haltevorrichtung besteht aus einem angespitzten Haltestift, der durch Bohrungen quer am vorderen, geschlossenen Rohrbereich durchsteckbar ist, wobei der Aalkopf durchdrungen und gehalten wird. Der Haltestift kann dabei solange dimensioniert sein, daß er am Rohr, zumindest an einer Seite, weit heraussteht und dort als Griff oder Anlage gegen eine Verdrehung des Rohrs verwendet werden kann.

Eine andere Haltevorrichtung nach Anspruch 8 besteht aus einem Kettchen, das bevorzugt mit kugeligen Kettengliedern ausgeführt ist und das endseitig einen Haken trägt. Dieser Haken wird am Aalkopf, beispielsweise in seinem Maul, verhakt, das Kettchen durch den vorderen, geschlossenen Bereich gesteckt und der Aalkopf mit dem Kettchen in diesen Bereich eingezogen. Anschließend wird die Kette mit einem Kettenglied an der Stirnseite des Rohrs fixiert, wobei dies am einfachsten durch Einrasten in einen Spalt realisierbar ist.

Eine weitere Haltevorrichtung nach Anspruch 9 besteht aus einer Klammer, die etwa U-förmig ausgebildet ist, wobei ein U-Schenkel angespitzt und auf den anderen zugerichtet ist. Der angespitzte U-Schenkel wird an der Kopfunterseite des Aals eingehakt und der andere U-Schenkel in entsprechenden Bohrungen am geschlossenen Rohrbereich eingesteckt. Insbesondere bei dieser Ausführung ist es vorteilhaft, den mit Anspruch 10 beanspruchten, spitz zulaufenden Materialausschnitt zu verwenden.

Mit allen drei vorstehend beschriebenen Haltevorrichtungen wird der Kopf des Aals gut und sicher in Längsrichtung und gegen Verdrehen gehalten.

Anhand einer Zeichnung werden drei Ausführungsbeispiele der Erfindung mit weiteren Einzelheiten, Merkmalen und Vorteilen näher erläutert.

Es zeigen

Fig. 1 eine perspektivische Ansicht einer ersten Ausführungsform einer Vorrichtung zum Ausnehmen von Aalen mit einer ersten Haltevorrichtung, die nochmals in Seitenansicht dargestellt ist,

Fig. 2 eine Seitenansicht der Vorrichtung nach Fig. 1 mit einer zweiten Ausführung einer Haltevorrichtung,

Fig. 3 eine Draufsicht auf die Vorrichtung nach Fig. 2,

Fig. 4 eine Seitenansicht einer zweiten Ausführungsform einer Vorrichtung zum Ausnehmen von Aalen mit einer dritten Ausführungsform einer Haltevorrichtung und

Fig. 5 eine Draufsicht auf die Vorrichtung nach Fig. 4.

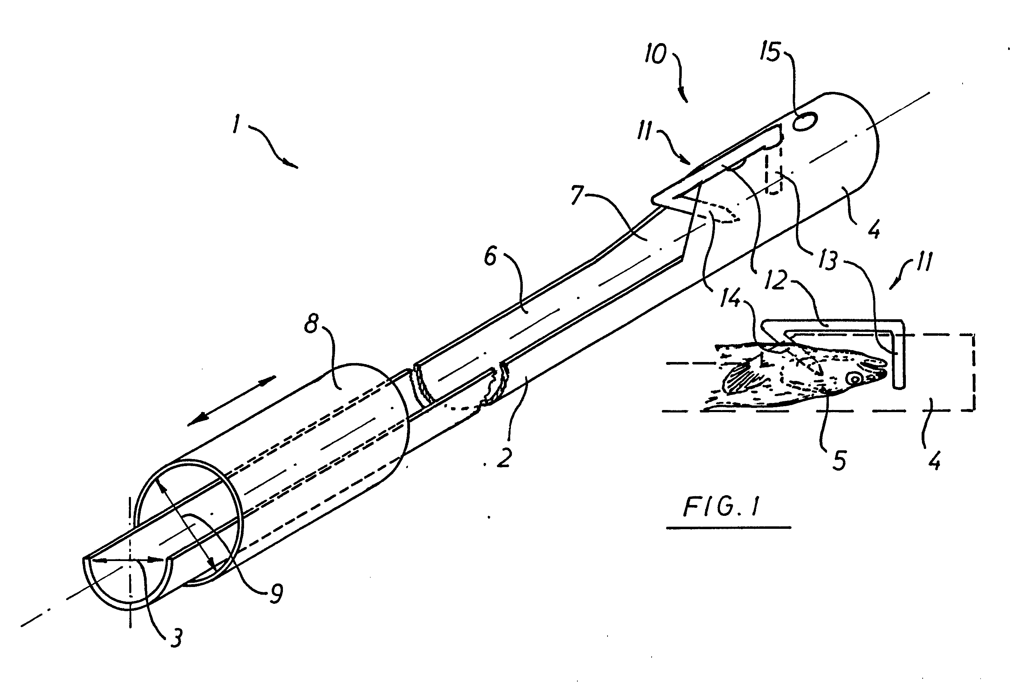

In Fig. 1 ist in perspektivischer Zeichnung eine Vorrichtung zum Ausnehmen von Aalen in einer ersten Ausführungsform dargestellt, die aus einem Rohr 2 besteht, das einen Innendurch messer 3 etwa im Durchmesser eines auszunehmenden Aales aufweist. Das Rohr ist in einem vorderen Bereich 4 zylindrisch geschlossen, wobei dieser Bereich wenigstens etwa der Länge eines Aalkopfes 5 entspricht.

Ausgehend vom vorderen, geschlossenen Bereich 4 ist das Rohr 2 nach hinten einseitig in Längsrichtung nach oben offen und bildet somit einen offenen Rinnenbereich 6, der etwa der Länge eines Aalkörpers entspricht. Der Rinnenbereich 6 geht durch einen schrägen Materialausschnitt 7 nach vorne zu spitz in den geschlossenen bereich 4 über.

Über das Rohr 2 ist eine Schiebehülse 8 geschoben mit einem Innendurchmesser 9, der dem Außendurchmesser des Rohres 2 entspricht bzw. geringfügig größer ist, so daß die Schiebehülse 8 entlang am Rohr 2 verschiebbar ist.

Eine Haltevorrichtung 10 für den Aalkopf 5 gesteht aus einer U-förmigen Klammer 11, wobei die U-Basis 12 und ein erster U-Schenkel 13 etwa senkrecht aufeinander stehen und der zweite U-Schenkel 14 zugespitzt ist und auf den ersten U-Schenkel 13 zu geneigt ist. Am vorderen Bereich 4 sind von oben her Bohrungen 15 angebracht, in die der erste U-Schenkel 13 so einsteckbar ist, daß der zweite U-Schenkel 14 in den Rinnenbereich 6 hineinsteht.

Die beschriebene Vorrichtung hat folgende Funktion: Nachdem ein Aal gefangen wurde, wird dieser durch einen Stich getötet und anschließend der zweite U-Schenkel 14 im Kopfbereich von unten her so eingehakt, daß der erste U-Schenkel 13 vor dem Kopf 5 zu liegen kommt. Anschließend wird der Kopf 5 mit Hilfe der Klammer 11 in den vorderen Bereich 4 eingeschoben und der erste U-Schenkel 13 in eine geeignete Bohrung 15 eingesteckt. Dadurch ist der Kopf 5 des Aals festgehalten und fixiert. Anschließend wird der Körper des Aals in den Rinnenbereich 6 eingedrückt und die Schiebehülse 8 über den Körper (im hinteren Bereich) geschoben. Damit kann sich der Aal nicht mehr bewegen und liegt zum Ausnehmen ruhig bereit. Der Schnitt am Bauch des Aals wird bei Verwendung der Vorrichtung zweckmäßig von vorne nach hinten geführt, wobei im Verlauf des Schnittes die Schiebehülse 8 mitgeschoben werden kann, so daß die jeweilige Schnittstelle in jedem Fall völlig ruhig liegt. Ersichtlich braucht der glitschige Aal nicht mit der Hand gehalten zu werden, da er in der Röhre liegt und diese sicher gehalten werden kann.

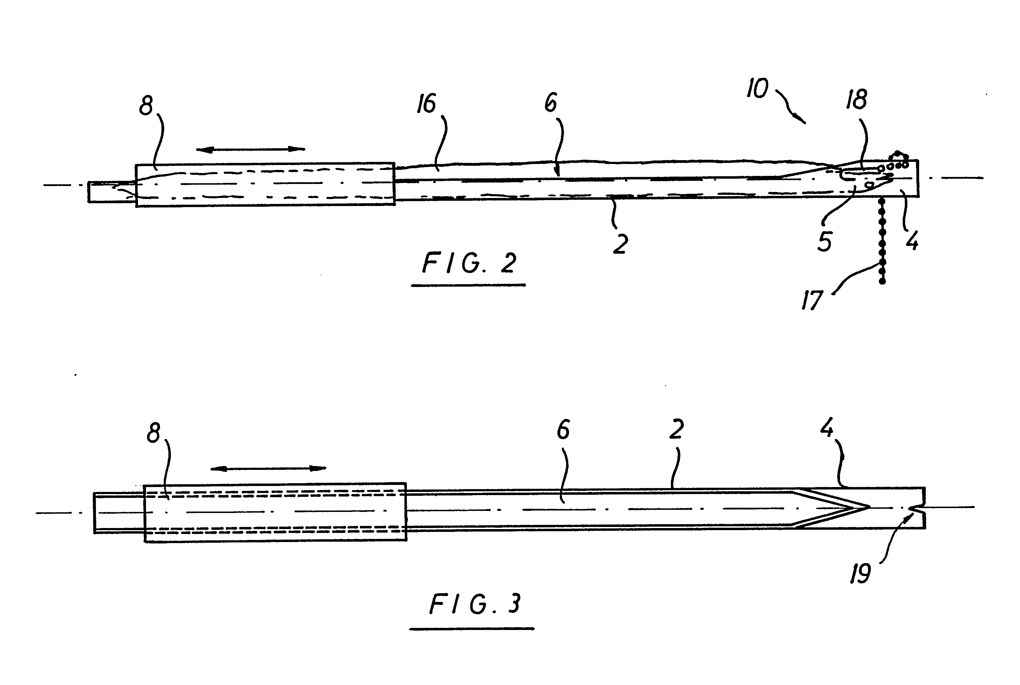

In der Seitenansicht der Fig. 2 ist wiederum das Rohr 2 mit dem Rinnenbereich 6 und dem vorderen, geschlossenen Bereich 4 sowie der Schiebehülse 8 zu erkennen. Hierbei ist aus zu sehen, wie der Aalkörper 16 in der Röhre gehalten ist.

Die Haltevorrichtung 10 für den Kopf 5 besteht aber hier aus einem Kettchen 17 mit kugeligen Kettengliedern und einem endseitig angebrachten Haken 18. Der Haken 18 ist ähnlich wie der zweite U-Schenkel 14 von untern her am Kopf 5 des Aals eingehakt. Mit Hilfe des Kettchens 17 wird der Aalkopf 5 in den vorderen Bereich 4 hineingezogen. Anschließend kann das Kettchen 17 an einem stirnseitigen Spalt 19 (sh. Draufsicht in Fig. 3) eingehakt werden.

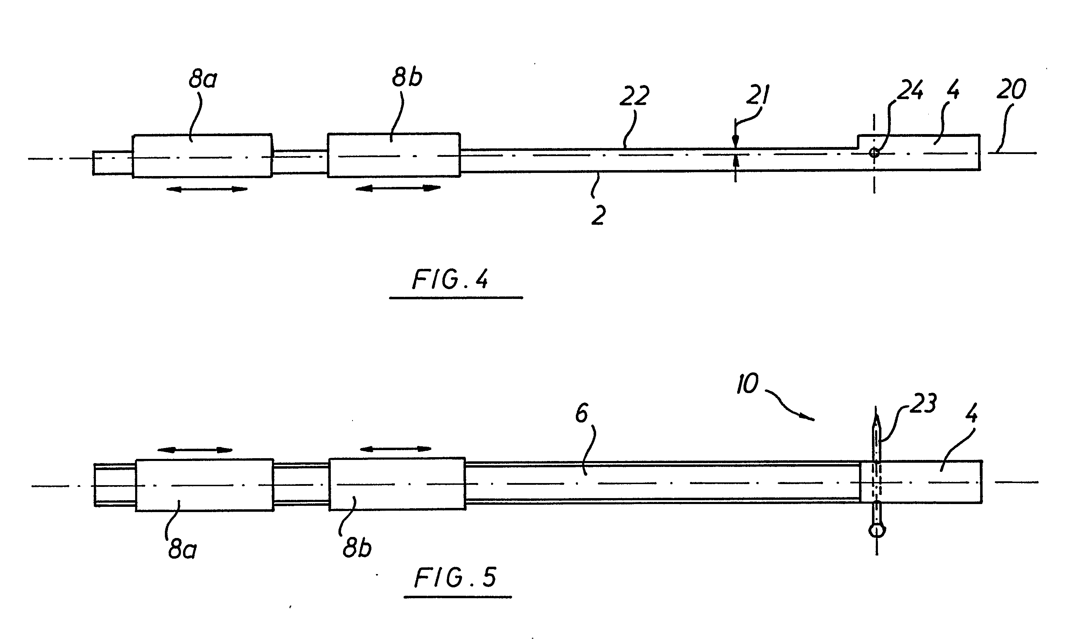

Eine bevorzugte Ausführung der Vorrichtung zum Ausnehmen eines Aals ist in der Seitenansicht nach Fig. 4 und Draufsicht nach Fig. 5 dargestellt. Auch hier ist wieder ein Rohr 2 mit einem vorderen, geschlossenen Bereich 4 und einem Rinnenbereich 6 verwendet. Der Rinnenbereich 6 hat aber hier keinen schräg nach oben verlaufenden Materialausschnitt 7 und geht somit stufenförmig und nicht spitz in den vorderen Bereich 4 über. Dieser spitz verlaufende Übergang ist bei der Haltevorrichtung 10 nach Fig. 1 zweckmäßig, um die verwendete Klammer 11 zu stabilisieren. Bei der Haltevorrichtung 10 nach der vorliegenden Ausführungsform der Fig. 4 und 5 ist dies nicht erforderlich.

An der Lage der Mittellinie 20 und dem Abstand 21 zu den Längsrinnenrändern 22 ist aus der Seitenansicht nach Fig. 4 zu erkennen, daß der Rinnenbereich 6 mehr als die Hälfte geschlossen ist, so daß die Längsrinnenränder 22 (im Querschnitt gesehen) bereits etwas aufeinander zugerichtet stehen. Damit wird der in den Rinnenbereich 6 eingelegte Aal sehr gut und noch etwas umgreifend gehalten.

Anstelle einer Schiebehülse sind hier zwei getrennt hintereinanderliegende, im einzelnen etwas kürzer wählbare, Schiebehülsen 8a und 8b vorgesehen, die voneinander unabhängig entlang des Rohres 2 verschiebbar sind. Damit kann ein im Rinnenbereich 6 liegender Aal sehr gut ruhig gehalten werden, wobei die Schiebehülsen 8a und 8b so verschoben werden können, daß mit Sicherheit der Schnittbereich beim Ausnehmen völlig ruhig liegt.

Die hier dargestellte Haltevorrichtung 10 besteht aus einem angespitzten Haltestift 23, der durch Bohrungen 24 quer zum Verlauf des Rinnenbereichs 6 im geschlossenen Bereich 4 durch das Rohr 2 und einen eingebrachten Aalkopf durchsteckbar ist. Damit wird ein Aalkopf sicher und fest in allen Richtungen und auch gegen Verdrehen gehalten.

Zusammenfassend wird festgestellt, daß mit der Erfindung eine Vorrichtung zum einfachen, schnellen, ungefährlichen und fischschonenden Ausnehmen von Aalen zur Verfügung gestellt wird, die insbesondere auch bei schlechten Lichtverhältnissen, wie sie beim Nachtfischen vorliegen, verwendbar ist.

## Ansprüche

1. Vorrichtung zum Ausnehmen von Aalen, gekennzeichnet durch
ein Rohr (2) mit einem Innendurchmesser (3) etwa entsprechend dem Durchmesser und mit wenigstens einer Länge entsprechend der Länge eines auszunehmenden Aals (5, 16), wobei
das Rohr (2) in einem vorderen Bereich (4) wenigstens in der Länge des Kopfbereichs (5) des Aals geschlossen ist und dieser geschlossene Bereich (4) zum Einlegen und Halten des Aalkopfs (5) dient, und
das Rohr (2) vom geschlossenen, vorderen Bereich (4) ausgehend nach hinten einseitig in Längsrichtung wenigstens in der Länge des Aals (5, 16) offen ist, so daß ein nach oben offener Rinnenbereich (6) zum Einlegen des Aalkörpers (16) gebildet ist, und
durch wenigstens eine geschlossene Schiebehülse (8; 8a, 8b), die am Rohr (2) entlang wenigstens im Rinnenbereich (6) verschiebbar ist, so daß im Schiebehülsenbereich die Rinne geschlossen ist.

2. Vorrichtung nach Anspruch 1, dadurch gekennzeichnet, daß die Schiebehülse (8; 8a, 8b) mit einem Reibschluß selbsthemmend auf dem Rohr (2) verschiebbar ist.

3. Vorrichtung nach Anspruch 1 oder 2, dadurch gekennzeichnet, daß ein zylindrischer Rinnenbereich (6) mehr als zur Hälfte im Umfang geschlossen ist, so daß die gegenüberliegenden Längsränder (22) bereits etwas aufeinander zu gerichtet stehen.

4. Vorrichtung nach einem der Ansprüche 1 bis 3, dadurch gekennzeichnet, daß zwei Schiebehülsen (8a, 8b) am Rohr (2) vorgesehen sind.

5. Vorrichtung nach einem der Ansprüche 1 bis 4, dadurch gekennzeichnet, daß die Länge der Schiebehülse (8) bzw. bei zwei Schiebehülsen (8a, 8b) die Summe deren Längen etwa 1/3 der Länge des offenen Rinnenbereichs (6) ist und die Gesamtanordnung zylindrisch ist.

6. Vorrichtung nach einem der Ansprüche 1 bis 5, dadurch gekennzeichnet, daß am vorderen Bereich (4) eine Haltevorrichtung (10) für den Aalkopf (5) vorgesehen ist.

7. Vorrichtung nach Anspruch 6, dadurch gekennzeichnet, daß die Haltevorrichtung (10) aus zwei gegenüberliegenden, mittigen Bohrungen (24) besteht, durch die quer zum Röhrenverlauf und bevorzugt parallel zu den beiden Rinnenrändern (22) ein angespitzter Haltestift (23) bei eingeführtem Aalkopf (5) und durch diesen hindurch einsteckbar ist.

8. Vorrichtung nach Anspruch 6, dadurch gekennzeichnet, daß die Haltevorrichtung (10) aus einem Kettchen (17) bevorzugt mit kugeligen Kettengliedern und einem eindseitig angebrachten Haken (18) besteht, wobei ein Kettenglied in einem stirnseitigen Spalt (19) am vorderen Bereich einrastbar ist.

9. Vorrichtung nach Anspruch 6, dadurch gekennzeichnet, daß die Haltevorrichtung aus einer Klammer (11) besteht, die etwa U-förmig ausgebildet ist,
wobei die U-Basis (12) und der erste U-Schenkel (13) etwa senkrecht aufeinander stehen,
der zweite U-Schenkel (14) mit der U-Basis (12) einen spitzeren Winkel einschließt, so daß der zweite U-Schenkel (14) auf den ersten U-Schenkel (13) zu geneigt ist,
der zweite U-Schenkel (14) angespitzt ist und zum Einhaken am Aalkopf (5) dient, und
am vorderen Bereich (4) wenigstens eine Bohrung (15) im Durchmesser des Klammermaterials, bevorzugt senkrecht zu den Rinnenrändern (22), vorgesehen ist, in die der erste U-Schenkel (13) einsteckbar ist.

10. Vorrichtung nach einem der Ansprüche 1 bis 9, dadurch gekennzeichnet, daß der Rinnenbereich (6) mit einem spitz nach vorne zulaufenden Materialschnitt (7) in den geschlossenen, zylindrischen Bereich (4) übergeht.

EP 0 352 366 A2

FIG. 1

PI36 OS 88 40

EP 0 352 366 A2

8      16      6      10      18

2

5      4

17

*F I G. 2*

8      6      2      4

19

*F I G. 3*

P I36 OS 88 40

EP 0 352 366 A2

P 136 OS 8840

8a   8b      22      21      24   4   20

*FIG.4*

10

6

23   4

8a   8b

*FIG.5*